(19) **Europäisches Patentamt European Patent Office Office européen des brevets**

(11) **EP 2 219 910 B1**

(12) **FASCICULE DE BREVET EUROPEEN**

(45) Date de publication et mention de la délivrance du brevet:
**08.07.2015 Bulletin 2015/28**

(21) Numéro de dépôt: **08851618.2**

(22) Date de dépôt: **20.11.2008**

(51) Int Cl.:
***B60T 7/12*** *(2006.01)*          ***B60W 30/18*** *(2012.01)*

(86) Numéro de dépôt international:
**PCT/EP2008/065896**

(87) Numéro de publication internationale:
**WO 2009/065888 (28.05.2009 Gazette 2009/22)**

(54) **PROCEDE D'ASSISTANCE AUX MANOEUVRES EN COTE**

VERFAHREN ZUR UNTERSTÜTZUNG VON MANÖVERN AN EINER STEIGUNG

METHOD FOR ASSISTING WITH HILL MANOEUVRES

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **21.11.2007 FR 0759205**

(43) Date de publication de la demande:
**25.08.2010 Bulletin 2010/34**

(73) Titulaire: **Renault s.a.s.**
**92100 Boulogne-Billancourt (FR)**

(72) Inventeurs:
• **MONTI, Alessandro**
**F-92250 La Garenne-colombes (FR)**
• **POTHIN, Richard**
**F-78760 Jouars-ponchartrain (FR)**

(56) Documents cités:
**FR-A- 2 828 450     FR-A- 2 841 199**

**Description**

La présente invention concerne un procédé d'assistance aux manoeuvres en côte pour un véhicule.

Il concerne plus particulièrement un procédé d'aide au démarrage en côte en conditions dégradées, pour un véhicule automobile à boîte de vitesse manuelle ou automatique.

Sur certains véhicules, les constructeurs automobiles proposent un frein de stationnement assisté.

Ce Frein de Stationnement assisté doit apporter une prestation valorisable par le client, en raison de son coût relativement élevé par rapport à la solution du Frein de Stationnement traditionnel.

Pour valoriser ce système, des constructeurs ont donc décidé d'y associer une fonction d'assistance aux manoeuvres en côte, et notamment d'assistance au démarrage en côte (ou décollage), dont le principe est de relâcher les freins sur les roues non motrices dès que le couple transmis par le moteur aux roues motrices est suffisant pour compenser l'effet de la pente de la côte.

Un véhicule équipé d'un dispositif d'assistance au démarrage en côte conventionnel comprend notamment un groupe motopropulseur, un frein de stationnement assisté 5, un bus 4, sur lequel transitent des signaux provenant du reste du véhicule 6, et un calculateur 1 de contrôle du groupe motopropulseur. Le reste du véhicule 6 comprend notamment la boîte de vitesse.

Le bus 4 est de préférence un bus de la norme CAN™ (Control Area Network, pour réseau de zone de commande).

Le groupe motopropulseur est composé d'un moteur thermique couplé à des roues motrices par un dispositif de transmission comportant une boîte de vitesse et un embrayage, qui peuvent être commandés par l'usager (dans le cas des véhicules à boîtes manuelles) ou par un automatisme (dans le cas d'un véhicule équipé d'une boîte automatique).

En variante, le groupe motopropulseur peut comporter une ou plusieurs machines électriques, avec ou sans moteur thermique.

Le dispositif d'assistance au démarrage en côte coopère avec un calculateur 1 de contrôle du frein de stationnement assisté 5, qui est également connecté au bus 4.

Le calculateur 1 est équipé, ainsi qu'il est connu, d'un moyen pour produire des ordres de serrage et de desserrage du frein de stationnement assisté 5, lesdits ordres du Frein 5 étant générés sur une ligne de connexion au Frein de Stationnement assisté 5 proprement dit. Le cas échéant, le calculateur 1 est également équipé d'un moyen pour transmettre au bus 4 des informations d'état du Frein de Stationnement assisté 5.

Le calculateur 1 de contrôle du Frein de Stationnement assisté 5 est connecté par une ligne convenable à un capteur de pente 2. Dans d'autres formes de réalisation, si une information sur l'inclinaison de la pente est disponible sur le bus 4, le capteur 2 est remplacé par un moyen équivalent qui prélève cette information sur le flux de données transitant par le bus 4.

Lorsque le véhicule se trouve arrêté dans une pente, le capteur de pente 2 délivre un signal représentatif de l'inclinaison de la pente (que l'on désignera également par l'expression caractéristique de la pente) dans laquelle est arrêté le véhicule.

Lorsque le calculateur 1 de contrôle du Frein de Stationnement assisté 5 produit un ordre de serrage, les parties mobiles des freins viennent serrer les disques de sorte que le frein de stationnement assisté 5 soit serré.

Inversement, lorsque le calculateur 1 de contrôle du frein de stationnement assisté 5 produit un ordre de desserrage du frein de stationnement assisté 5, les parties mobiles des freins sont relâchées.

Par ailleurs, en situation de démarrage (que ce soit en côte ou à plat), le groupe motopropulseur du véhicule produit un couple qui est ou non transmis aux roues, selon que l'embrayage est actif ou non, et selon une fraction qui dépend de la position de l'embrayage.

Ainsi, conventionnellement, le principe d'un procédé d'aide au démarrage en côte consiste à déterminer une condition de desserrage du frein de stationnement assisté 5, fonction notamment de la force longitudinale entre les roues du véhicules et le sol, et donc de la caractéristique de la pente, mesurée lorsque l'usager et le véhicule sont prêts à décoller, et du couple $C_T$ transmis à l'embrayage.

Cette condition est déterminée de sorte que le véhicule se trouve en situation de décollage dès qu'un certain seuil est dépassé, où l'effet de pente est équilibré par le couple moteur.

Pour cela, le document FR 2 841 199 propose un procédé de desserrage automatique du Frein de Parking assisté au démarrage, dans lequel le seuil correspond à une valeur de seuil d'estimation de couple transmis, déterminée afin d'équilibrer le mouvement du véhicule dans la pente à partir d'une mesure de la caractéristique de la pente au moyen d'un capteur de pente et de la connaissance d'une valeur représentative du rapport de transmission.

On a proposé également, dans le document FR 2 828 450, un dispositif d'assistance au démarrage en côte pour un véhicule comportant des moyens pour contrôler le desserrage des freins mécaniques qui agissent sur les roues du véhicule, de sorte que le véhicule reste maintenu dans la pente lors d'une manoeuvre en côte sans que le conducteur ait à intervenir. Il exploite pour cela la caractéristique de la pente, indiquée par exemple par un capteur de pente, l'interprétation et l'anticipation des commandes du conducteur et/ou d'un organe central de conduite et les caractéristiques instantanées de l'embrayage.

Toutefois, dans leur forme actuelle, l'algorithme de ces dispositifs ne fonctionne pas si le signal du capteur de pente (ou d'un moyen équivalent délivrant une information sur la caractéristique de la pente) n'est pas exploitable lors du démarrage du véhicule. Cela conduit à un refus du desserrage des freins, et au démarrage du véhicule alors que les parties mobiles des freins ne sont pas relâchées.

Par ailleurs, l'absence (ou le dysfonctionnement) d'un capteur d'embrayage, ou encore de l'information sur le rapport de boîte de vitesse engagé, peut nuire à la qualité du démarrage en côte.

Un objectif de l'invention est donc de pallier aux inconvénients de la technique antérieure, en proposant un procédé d'assistance aux manoeuvres en côte permettant à un conducteur de démarrer sans endommager le dispositif de freinage et ce, quelle que soit la fiabilité du signal délivré par le capteur de pente.

Un autre objet de l'invention est de proposer un procédé d'assistance aux manoeuvres en côte qui puisse fonctionner quand bien même les informations sur la position de l'embrayage et/ou sur le rapport de boîte de vitesse engagé ne sont pas disponibles.

Un autre objet de l'invention est de proposer un procédé d'assistance aux manoeuvres en côte qui puisse fonctionner en conditions dégradées tout en permettant au conducteur d'effectuer sa manoeuvre, en le rendant cependant conscient de l'existence d'une panne ou d'un dysfonctionnement de l'un des éléments composant le dispositif associé.

Enfin, un objet de l'invention est de proposer un procédé d'assistance aux manoeuvres en côte applicable aux véhicules munis d'une boîte de vitesses manuelle ou automatique.

Pour cela, l'invention propose un procédé d'assistance aux manoeuvres en côte pour un véhicule, comprenant un groupe motopropulseur connecté aux roues motrices au moyen d'une boîte de vitesse et d'un embrayage ou d'un convertisseur de couple, et un frein de stationnement assisté, au cours duquel on détermine un couple de décollage seuil en fonction des efforts longitudinaux entre les roues du véhicule et le sol, caractérisé en ce que, en fonctionnement dégradé, c'est-à-dire lorsqu'on reçoit un signal correspondant à la caractéristique de la pente qui n'est pas exploitable et/ou lorsque le calculateur ne dispose pas de signal caractéristique du rapport de boîte engagé, on détermine une valeur seuil pour le couple de décollage sans tenir compte de la valeur réelle de la caractéristique de la pente et/ou de la caractéristique du rapport de boîte.

Le procédé selon l'invention comprend les caractéristiques suivantes, lorsque le dispositif est en fonctionnement dégradé :

- lorsqu'on reçoit un signal correspondant à la caractéristique de la pente qui n'est pas exploitable, on détermine la valeur seuil du couple de décollage en fonction d'une valeur prédéfinie de la caractéristique de la pente ;

- lorsqu'on ne dispose pas d'informations sur le rapport de boîte de vitesse engagé, on détermine la valeur seuil du couple de décollage en fonction d'une valeur prédéfinie du rapport de boîte engagé fixée à la valeur maximale en valeur absolue dudit rapport ;

Pour cela, l'invention propose également un dispositif d'assistance aux manoeuvres en côte pour un véhicule automobile comprenant un groupe motopropulseur connecté aux roues motrices au moyen d'une boîte de vitesse et d'un embrayage ou d'un convertisseur de couple, le dispositif comprenant également un frein de stationnement assisté, un capteur de pente et un calculateur, caractérisé en ce qu'il comprend en outre des moyens pour déterminer si un signal caractéristique de la pente délivré par le capteur de pente est exploitable et/ou des moyens pour déterminer si un signal caractéristique du rapport de boîte est engagé, et en ce que le calculateur est agencé pour déterminer une valeur seuil pour le couple de décollage sans tenir compte de la valeur réelle de la caractéristique de la pente et/ou de la caractéristique du rapport de boîte, selon la revendication indépendante 4.

D'autres caractéristiques, buts et avantages de la présente invention apparaîtront à la lecture de la description détaillée qui va suivre, au regard des dessins annexés, donnés à titre d'exemples non limitatifs et sur lesquels :

- La figure 1 représente l'architecture fonctionnelle d'un véhicule équipé du dispositif selon l'invention,
- La figure 2 représente le principe de fonctionnement de l'automate qui estime le couple transmis aux roues d'un véhicule ayant une boîte manuelle, mis en oeuvre dans l'invention,

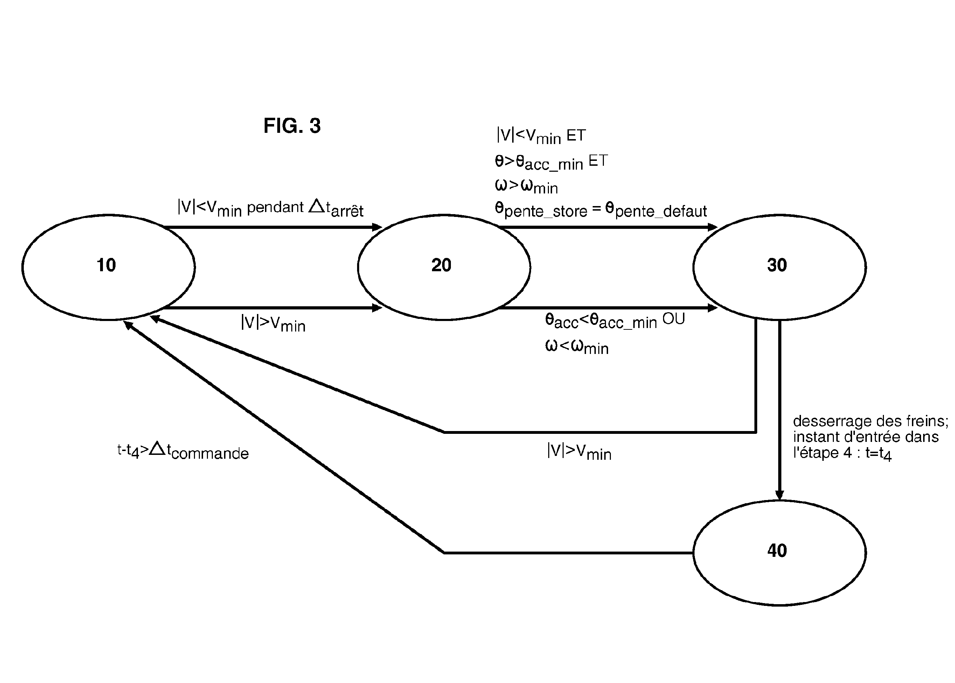

- La figure 3 représente l'automate utilisé en mode dégradé, lorsque l'information sur la caractéristique de la pente n'est pas disponible, pour détecter la situation dans laquelle le véhicule et l'usager sont prêts à décoller,

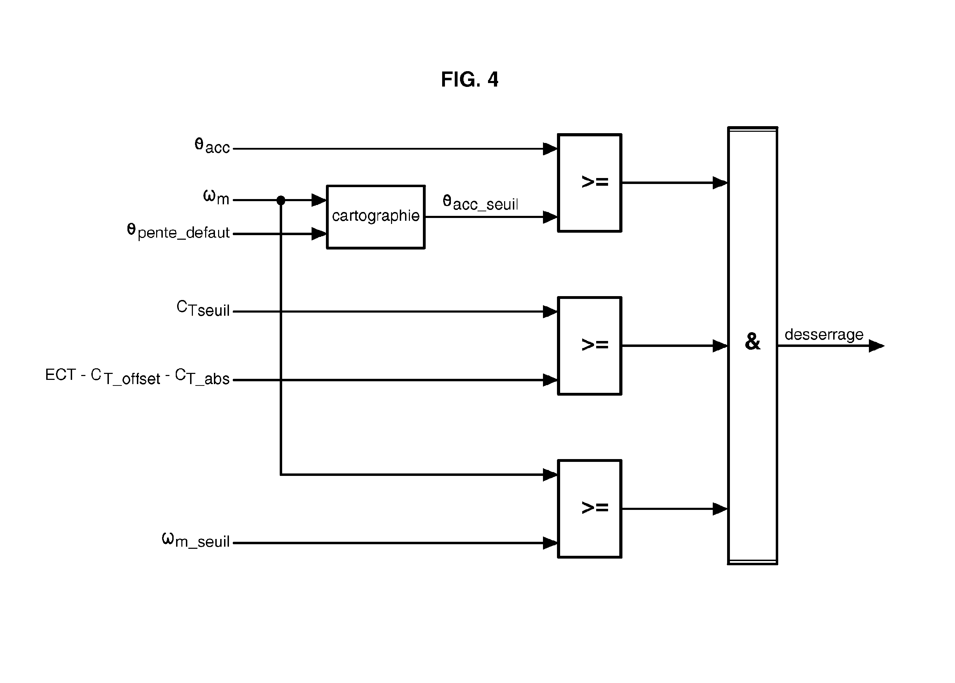

- La figure 4 représente un schéma de principe du procédé d'aide au démarrage en côte selon l'invention, en mode dégradé, lorsque l'information sur la caractéristique de la pente n'est pas disponible,
- La figure 5 représente un schéma de principe du procédé d'aide au démarrage en côte selon l'invention, en mode dégradé, lorsque l'information sur la caractéristique de la pente n'est pas disponible et un capteur de position de la pédale d'embrayage est utilisé.

Pour décoller, un véhicule stationné dans une pente doit vaincre l'effet de pente, dû à la force d'attraction de la terre.

Cet effet est fonction de la caractéristique de la pente et de la masse du véhicule, et vaut :

$$m.g.sin(\theta_{pente})$$

où • *m* est la masse du véhicule,

- *g* est la gravité,
- $\theta_{pente}$ est la caractéristique de la pente.

Le couple minimum $C_{T\_seuil}$ qu'il faut transmettre aux roues par l'intermédiaire de la chaîne cinématique, pour permettre au véhicule de décoller (c'est-à-dire de démarrer dans la pente), doit donc être au moins égal à :

$$C_{T\_seuil} = m.g.sin(\theta_{pente}).r(b).\rho_{roues}$$

où • *r(b)* est le rapport de boîte engagé, correspondant à la position b du levier de vitesse,

- $\rho_{roues}$ est le rayon sous charge des roues du véhicule.

Ce couple $C_{T\_seuil}$ est le couple seuil de décollage. On ne relâche le Frein de Stationnement assisté 5, en phase de démarrage à l'arrêt, que lorsque le couple transmis $C_T$ aux roues est supérieur au couple seuil $C_{T\_seuil}$ de décollage.

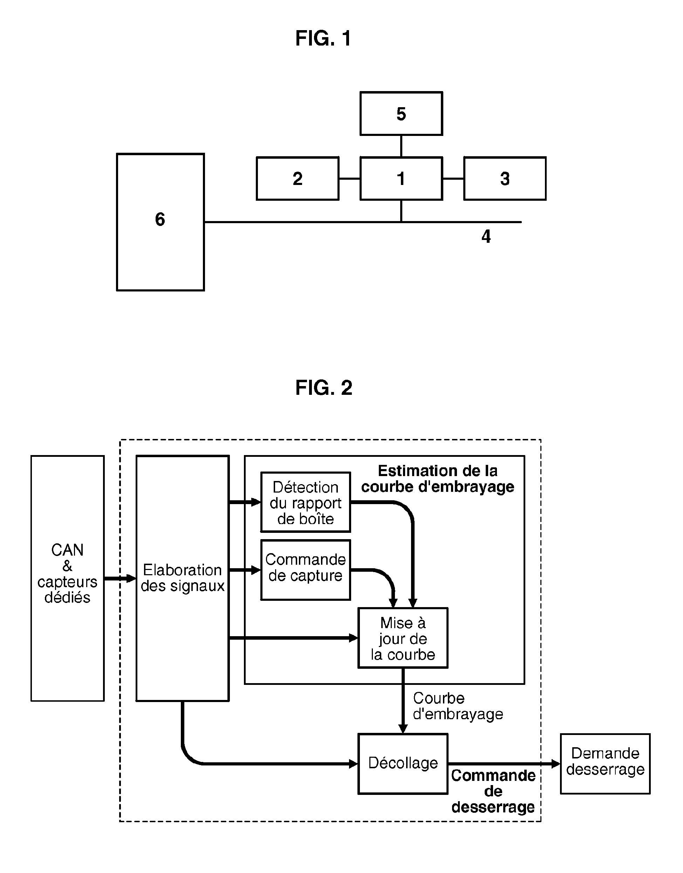

Pour les boîtes de vitesse manuelles, le couple ECT transmis par l'embrayage est estimé par un automate tel que celui décrit par la demande de brevet française FR 2 828 450 (illustré par la figure 2 annexée, pour une boîte manuelle, et que nous ne décrirons pas davantage dans la suite de la description), tandis que pour les boîtes de vitesse automatiques et/ou robotisées et/ou continûment variable, le couple ECT est calculé puis transmis par un convertisseur de couple, selon des techniques connues.

Le procédé selon l'invention est implémenté différemment selon le mode de fonctionnement du dispositif d'assistance aux manoeuvres en côte.

En fonctionnement nominal, tous les éléments du dispositif d'assistance fonctionnent (le capteur de pente notamment délivre un signal exploitable), et l'algorithme exploite le couple transmis ECT (obtenu par calcul ou estimation), à partir de l'équation :

$$C_{T\_seuil} = m.g.sin(\theta_{pente}).r(b).\rho_{roues}.$$

Lors du décollage, le véhicule ayant tendance à se cambrer, l'information fournie par le capteur sur la caractéristique de la pente augmente l'estimation du couple seuil $C_{T\_seuil}$ de décollage. Pour éviter cela, on détecte le moment où le véhicule et son usager sont prêts à décoller, et on « gèle » la caractéristique de la pente correspondant à cet instant.

On entend par « gel » de la caractéristique la mise en mémoire par des moyens de stockage de la valeur de la caractéristique $\theta_{pente}$ de la pente correspondant à cet instant.

La détection dudit instant est réalisée à l'aide de l'automate décrit par la demande de brevet FR 07 56319, déposée le 6 Juillet 2007 par la Demanderesse, et ne sera pas davantage décrit.

En revanche, si le capteur de pente délivre un signal non exploitable, le procédé d'assistance fonctionne en mode dégradé.

Plus généralement, on considère dans la suite de la description que le dispositif fonctionne en mode dégradé lorsque :

- le signal délivré par le capteur de pente est non exploitable, et/ou
- lorsque le calculateur (employé quel que soit le type de boîte de vitesse) ne dispose pas d'informations sur le rapport de boîte engagé.

Par ailleurs, dans la suite de la description, on considère qu'un signal délivré par le capteur de pente est exploitable lorsqu'il correspond à une caractéristique de pente $\theta_{pente}$ admissible (par exemple à une caractéristique comprise, en valeur absolue, entre 0° et environ la pente maximum franchissable par le véhicule, généralement environ 30°). En revanche, par signal non exploitable, on entend soit un signal correspondant à une caractéristique de pente absurde (par exemple une caractéristique d'une valeur supérieure, en valeur absolue, à 30°), soit une absence de signal (ce qui correspond à un capteur de pente en panne).

On détermine alors la valeur du couple seuil $C_{T-seuil}$ de décollage à partir d'une valeur prédéfinie $\theta_{pente\_défaut}$ de la caractéristique de la pente.

Cette détermination est donc indépendante de la valeur réelle de la caractéristique de la pente, et correspond, pour des raisons de sécurité, à la valeur de la caractéristique pour un décollage en montée (c'est-à-dire contre la pente), dans une pente à forte inclinaison (typiquement, entre environ 20° et environ 30°, ou une valeur proche de la pente maximum franchissable par le véhicule). On assure ainsi que le couple seuil de décollage déterminé à partir de la caractéristique $\theta_{pente\_défaut}$ prédéfinie a une valeur plus élevée que le couple seuil de décollage qui aurait été obtenu à partir de la caractéristique réelle de la pente $\theta_{pente}$.

Ainsi, on garantit que le décollage est bien effectué dans le sens désiré par le conducteur, et qu'il est suffisant pour faire avancer la voiture dans le sens requis lorsque les parties mobiles des freins sont relâchées. D'autre part, le choix d'une telle valeur pour la caractéristique permet de rendre le conducteur conscient de l'existence d'une défaillance du système (ce dernier ressentant une secousse inhabituelle lors du décollage, due à la valeur plus élevée du couple que ce qui aurait été nécessaire en fonctionnement normal), sans pour autant immobiliser le véhicule ou bloquer les parties mobiles des freins lors du démarrage, contrairement aux procédés et dispositifs de la technique antérieure.

La valeur prédéfinie $\theta_{pente\_défaut}$ est donc un paramètre de mise au point qui permet la détermination (calcul ou estimation) du couple nécessaire au décollage.

En fonctionnement nominal comme en fonctionnement dégradé, l'algorithme du procédé interprète la volonté du conducteur.

Dans un premier état 10, la vitesse v du véhicule est supérieure à une vitesse minimum définie $v_{min}$.

L'automate considère alors que le véhicule circule.

Dans un deuxième état 20, la vitesse v du véhicule est inférieure à la vitesse minimum $v_{min}$ pendant au moins un temps défini $\Delta t_{arrêt}$.

L'automate considère alors le véhicule comme étant à l'arrêt (ou du moins que le véhicule est sur le point d'effectuer une manoeuvre en côte).

Si, dans ce deuxième état, la vitesse v devient supérieure à la vitesse minimum $v_{min}$, alors l'automate retourne à l'état initial 10.

Lorsque la vitesse v du véhicule est inférieure à la vitesse minimum $v_{min}$ depuis un temps t supérieur au temps $\Delta t_{arrêt}$, qu'un rapport de vitesse r(b) est engagé, que l'usager du véhicule enfonce la pédale d'accélérateur jusqu'à une position $\theta_{acc}$ supérieure à une position seuil $\theta_{acc\_min}$ définie (cette position pouvant par exemple être donnée en pourcentage d'enfoncement de la pédale), et que la vitesse de rotation angulaire $\omega_m$ du groupe motopropulseur est supérieure à une vitesse de rotation angulaire minimum $\omega_{min}$, l'automate estime que l'usager et le véhicule sont prêts à décoller.

Il est à noter que dans le cas des boîtes de vitesse manuelles, une condition pour estimer que le véhicule et l'usager sont prêts à décoller, est de vérifier que la pédale d'embrayage soit enfoncée jusqu'à une position $\theta_{emb}$ (cette position pouvant par exemple être donnée en pourcentage d'enfoncement de la pédale) supérieure à une position $\theta_{emb\_min}$ définie.

$\theta_{emb\_min}$ peut correspondre au point de léchage de la courbe d'embrayage. Celui-ci peut être identifié comme dans la demande de brevet FR 2 828 450.

L'état du capteur de pente est alors déterminant dans la suite du procédé.

En fonctionnement nominal, l'automate génère une instruction de mise en mémoire de la caractéristique de la pente $\theta_{pente}$ qui correspond à l'état dans lequel les paramètres remplissent lesdites conditions, et passe dans un troisième état 30. Le passage de l'état 20 à l'état 30 ne peut être réalisé que si une telle mise en mémoire est réalisée.

Pour la génération de l'instruction de mise en mémoire, un simple mécanisme « Sample and Hold » (c'est-à-dire un mécanisme échantillonneur bloqueur) est suffisant. Nous désignerons désormais cette caractéristique enregistrée par la référence $\theta_{pente\_store}$.

$$C_{T\_seuil} = m.g.sin(\theta_{pente\_store}).r(b).\rho_{roues}$$

où $\theta_{pente\_store} = \theta_{pente}$.

Si le calculateur ne dispose pas d'informations sur le rapport de boîte engagé r(b), par exemple lorsque le calculateur de la boîte de vitesse automatique est hors service ou les capteurs point mort et/ou marche arrière ne sont pas fiables, il détermine alors la valeur du couple nécessaire au décollage $C_{T\_seuil}$ à partir d'une valeur prédéfinie $r_{max}$ du rapport de boîte de vitesses (mode dégradé).

Ce calcul est donc indépendant du rapport de boîte de vitesse engagé réellement r(b), et correspond, pour des raisons de sécurité, au rapport de boîte le plus élevé $r_{max}$. On assure ainsi que le couple de seuil décollage déterminé à partir de ce rapport de boîte a une valeur au moins égale à celle du couple seuil de décollage qui aurait été obtenue à partir du rapport de boîte réellement engagé.

Ainsi, si l'information sur le rapport de boîte engagé n'est pas disponible, on a alors :

$$C_{T\_seuil} = m.g.sin(\theta_{pente\_store}).r_{max}.\rho_{roues.}$$

OÙ $\theta_{pente\_store} = \theta_{pente}$.

Si le signal délivré par le capteur de pente est non exploitable (mode dégradé), l'automate enregistre non pas la caractéristique réelle $\theta_{pente}$ de la pente, ni la caractéristique correspondant au signal non exploitable, mais la valeur prédéfinie $\theta_{pente-défaut}$. On passe alors à l'état 30.

$$C_{T\_seuil} = m.g.sin(\theta_{pente\_store}).r(b).\rho_{roues}$$

où $\theta_{pente\_store} = \theta_{pente\_défaut}$

Si en outre l'information sur le rapport de boîte engagé n'est pas disponible, on a alors :

$$C_{T\_seuil} = m.g.sin(\theta_{pente\_store}).r_{max}.\rho_{roues}$$

avec toujours $\theta_{pente\_store} = \theta_{pente\_défaut}$

Le couple $C_{T\_seuil}$ minimum déterminé pour le décollage est donc obtenu en fonction de cette information enregistrée $\theta_{pente\_store}$, en fonctionnement nominal comme en fonctionnement dégradé, et non plus en fonction d'une caractéristique délivrée par le capteur de pente.

Le couple seuil $C_{T\_seuil}$ pour le décollage prend alors la valeur:

- 0 si la caractéristique de la pente enregistrée ($\theta_{pente\_store}$) est positive ou nulle et que la marche arrière est engagée, ou si la pente enregistrée ($\theta_{pente\_store}$) est négative ou nulle et que la marche avant est engagée, (fonctionnement normal) ;
- $m.g.sin(\theta_{pente\_store}).r(b).\rho_{roues}$, si la caractéristique

de la pente enregistrée $\theta_{pente\_store}$ est strictement positive et que la marche avant est engagée, ou si la pente enregistrée $\theta_{pente\_store}$ est strictement négative et que la marche arrière est engagée, lorsque l'information sur le rapport de boîte engagé r(b) est disponible au niveau du calculateur ;

- $m.g.sin(\theta_{pente\_store}).r_{max}.\rho_{roues}$ lorsque l'information sur le rapport de boîte engagé r(b) n'est pas disponible au niveau du calculateur.

Cette définition du couple seuil $C_{T\_seuil}$ de décollage permet donc de fixer ledit couple seuil $C_{T\_seuil}$ en condition nominale ainsi qu'en condition dégradée : information de pente non fiable ou absente et/ou information de rapport de boîte non fiable ou absente.

Si l'une des conditions sur la vitesse v du véhicule, la position $\theta_{acc}$ de la pédale d'accélération (ou de la pédale d'embrayage $\theta_{emb}$ pour une boîte de vitesse manuelle), la vitesse de rotation $\omega_m$ du groupe motopropulseur, n'est pas remplie, l'automate retourne dans l'état 20 (passage de l'état 30 à l'état 20).

Si la vitesse v (en valeur absolue) du véhicule devient supérieure à la vitesse minimum $v_{min}$, l'automate retourne à l'état 10 (passage de l'état 30 à l'état 10).

Si le couple ECT transmis par l'embrayage (boîte manuelle) ou par le convertisseur de couple (boîte automatique) est supérieur ou égal au couple $C_{T\_seuil}$ de décollage ainsi déterminé, et si certaines conditions sur la vitesse ($|V| < V_{min}$), sur la position $\theta_{acc}$ de la pédale d'accélération ($\theta_{acc} > \theta_{acc\_seuil}$), sur la vitesse de rotation $\omega_m$ ($\omega_m > \omega_{m\_seuil}$) du groupe motopropulseur sont satisfaites, l'automate entre alors dans un quatrième état 40, ce qui correspond à commander le desserrage des freins. Pour une boîte de vitesse manuelle, on pourra également prendre en compte une condition sur l'estimation du couple transmis par l'embrayage en fonction de la position de la pédale d'embrayage, en exploitant une courbe d'embrayage apprise (voir FR 2 828 450).

Lors de l'entrée dans cet état 40, les conditions de décollage sont réunies.

Avantageusement, $\theta_{acc\_seuil}$ dépend de la valeur de la caractéristique de la pente ($\theta_{pente\_store}$) prise en compte par le calculateur selon le mode de fonctionnement (normal ou dégradé) et de la vitesse de rotation angulaire $\omega_m$ du groupe motopropulseur.

La valeur $\theta_{acc\_seuil}$ peut être, par exemple, estimée à l'aide d'une cartographie de l'accélérateur.

Pour l'ensemble des pentes et régimes cartographiés, on mesure la position minimale $\theta_{acc\_seuil}$ de la pédale d'accélérateur nécessaire pour que le régime moteur soit suffisant pour générer le couple nécessaire à un décollage sans caler.

Cette cartographie peut être déterminée au préalable par des essais sur pistes.

Par conditions de décollage, on entend ici les conditions pour lesquelles l'automate considère que la voiture et l'usager sont prêts à décoller, à savoir sur le couple ECT $\geq$ $C_{T\_seuil}$, la position $\theta_{acc}$ de la pédale d'accélération, sur la vitesse de rotation $\omega_m$ du groupe motopropulseur, et le cas échéant sur la position $\theta_{emb}$ de la pédale d'embrayage.

A l'entrée de l'automate dans l'état 40, le calculateur 1 commande le desserrage du frein de stationnement assisté 5. On a alors t = $t_4$, où $t_4$ correspond au temps d'entrée de l'automate dans l'état 40.

L'automate reste dans l'état 40 pendant un certain temps $\Delta t_{commande}$ avant de retourner à l'état 10 si le véhicule a décollé (lorsque t - $t_4$ > $\Delta t_{commande}$).

L'automate reste dans l'état 40 pendant un certain temps $\Delta t_{commande}$ avant de retourner à l'état 30, si le véhicule n'a pas décollé et le client a relâché le pied de la pédale d'accélérateur ou le cas échéant de la pédale d'embrayage.

En variante, pour garantir que le couple ECT transmis soit au moins égal au couple de décollage, et ainsi s'assurer que le démarrage ait bien lieu dans le sens souhaité par le conducteur, le couple pris en compte par le calculateur pour le décollage du véhicule est égal à la différence entre la valeur du couple ECT transmis (estimé ou calculé, par exemple selon le procédé décrit dans la demande FR 2 828 450) et d'une valeur de couple supplémentaire $C_{T\_offset}$, fixée à une valeur donnée.

L'utilisation du couple estimé ECT est nécessaire notamment lorsque l'information sur le rapport de boîte engagé n'est pas disponible, dans la mesure où la cartographie de la courbe d'embrayage n'est pas suffisante puisqu'elle n'est liée qu'à la position de la pédale d'embrayage (aucun couple n'étant transmis si aucun rapport de vitesse n'est engagé).

Dans le cas où l'information sur le rapport de boîte engagé est disponible, l'utilisation du couple transmis ECT n'est pas strictement nécessaire, mais peut être utilisée afin d'augmenter la fiabilité de l'ordre de desserrage.

Par exemple, on choisit pour $C_{T\_offset}$ l'incertitude sur la valeur calculée ECT.

En outre, on prévoit de tenir compte également du couple $C_{T\_abs}$ absorbé par les éléments connectés au groupe motopropulseur.

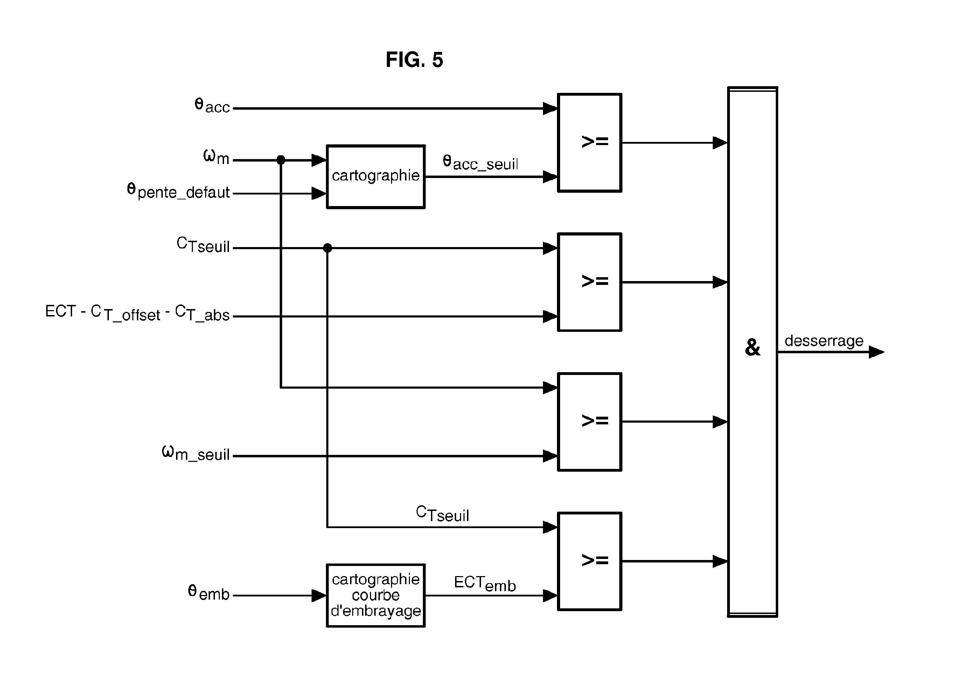

Pour cela, on peut par exemple calculer la moyenne des couples ECT transmis lorsque l'automate est dans l'état 20. En effet, soit le dispositif est débrayé ($\theta_{emb} < \theta_{emb-min}$), auquel cas le couple transmis par l'embrayage est nul, soit la pédale d'accélérateur n'est pas enfoncée ($\theta_{acc} < \theta_{acc-min}$), auquel cas le couple transmis est égal au couple $C_{T\_abs}$ absorbé par les éléments connectés au groupe motopropulseur. Ainsi, en faisant l'hypothèse que ce couple $C_{T\_abs}$ est constant lors du décollage, on garantit que la quantité ECT - $C_{T\_offset}$ - $C_{T\_abs}$ représente réellement le couple transmis par l'embrayage, disponible pour le décollage (voir figure 5).

A l'instant théorique de desserrage des freins (passage à l'état 40), le couple fourni par le moteur doit être au moins supérieur au couple transmis dans l'embrayage, car dans le cas contraire il y a presque toujours calage.

Il n'y a pas calage du véhicule sous les deux conditions suivantes :

- le conducteur accélère pour éviter le calage,
- le régime moteur est suffisant pour générer le couple demandé par le conducteur.

Ces conditions sont remplies par la cartographie de l'accélérateur.

**Revendications**

1. Procédé d'assistance aux manoeuvres en côte pour un véhicule, comprenant un groupe motopropulseur, connecté aux roues motrices au moyen d'une boîte de vitesse et d'un embrayage ou d'un convertisseur de couple, et un frein de stationnement assisté (5), au cours duquel on détermine un couple de décollage seuil ($C_{T\_seuil}$) en fonction des efforts longitudinaux entre les roues du véhicule et le sol, **caractérisé en ce que**, en fonctionnement dégradé, c'est-à-dire lorsqu'on reçoit un signal correspondant à la caractéristique de la pente ($\theta_{pente}$) qui n'est pas exploitable et/ou lorsque le calculateur ne dispose pas de signal caractéristique du rapport de boîte engagé (r(b)), on détermine une valeur seuil pour le couple de décollage ($C_{T\_seuil}$) sans tenir compte de la valeur réelle de la caractéristique de la pente en fonction d'une valeur prédéfinie ($\theta_{pente\_défaut}$) de la caractéristique de la pente correspondant à la valeur de la caractéristique pour un décollage dans une inclinaison entre 20 et 30° ou une valeur proche de la pente maximum franchissable par le véhicule et/ou de la caractéristique du rapport de boîte en fonction d'une valeur prédéfinie ($r_{max}$) du rapport de boîte engagé (r(b)), fixée à la valeur maximale en valeur absolue dudit rapport.

2. Procédé d'assistance selon la revendication 1, **caractérisé en ce que**, en fonctionnement dégradé, la valeur prédéfinie ($\theta_{pente\_défaut}$) correspond à une caractéristique de pente pour un décollage contre la pente.

3. Procédé d'assistance selon l'une des revendications 1 ou 2, **caractérisé en ce que**, pour déterminer la valeur du couple (ECT) transmis par l'embrayage ou par le convertisseur de couple, on prend en compte l'erreur sur l'estimation du couple transmis ($C_{T\_offset}$) et/ou du couple absorbé ($C_{T\_abs}$) par les éléments connectés au groupe motopropulseur.

4. Dispositif d'assistance aux manoeuvres en côte pour un véhicule automobile comprenant un groupe motopropulseur connecté aux roues motrices au moyen d'une boîte de vitesse et d'un embrayage ou d'un convertisseur de couple, le dispositif comprenant également un frein de stationnement assisté (5), un capteur de pente (2) et un calculateur (1), **caractérisé en ce qu'**il comprend en outre des moyens pour déterminer si un signal caractéristique de la pente délivré par le capteur de pente est exploitable et/ou des moyens pour déterminer si un signal caractéristique du rapport de boîte est engagé, et **en ce que** le calculateur est agencé pour déterminer une valeur seuil pour le couple de décollage ($C_{T\_seuil}$) sans tenir compte de la valeur réelle de la caractéristique de la pente en fonction d'une valeur prédéfinie ($\theta_{pente\_défaut}$) de la caractéristique de la pente correspondant à la valeur de la caractéristique pour un décollage dans une inclinaison entre 20 et 30° ou une valeur proche de la pente maximum franchissable par le véhicule et/ou de la caractéristique du rapport de boîte en fonction d'une valeur prédéfinie ($r_{max}$) du rapport de boîte engagé (r(b)), fixée à la valeur maximale en valeur absolue dudit rapport.

5. Dispositif d'assistance aux manoeuvres en côte selon la revendication 4, **caractérisé en ce qu'**il comprend des moyens pour mettre en oeuvre un procédé d'assistance selon l'une des revendications 1 à 3.

**Patentansprüche**

1. Verfahren zur Unterstützung von Manövern an einer Steigung für ein Fahrzeug, das ein Antriebsaggregat, das mittels eines Getriebes und einer Kupplung oder eines Drehmomentwandlers mit den Antriebsrädern verbunden ist, und eine Feststellbremse (5) mit Servounterstützung umfasst, während dessen ein Startschwellenmoment ($C_{T\_Schwellen}$) als Funktion der Längskräfte zwischen den Rädern des Fahrzeugs und dem Boden bestimmt wird, **dadurch gekennzeichnet, dass** bei beeinträchtigtem Betrieb, das heißt bei Empfang eines nicht nutzbaren der Eigenschaft der Steigung ($\theta_{Steigung}$) entsprechenden Signals, und/oder wenn der Rechner über kein für die eingelegte Gangübersetzung (r(b)) charakteristisches Signal verfügt, ein Schwellenwert für das Startmoment ($C_{T\_Schwellen}$) ohne Berücksichtigung des Istwerts der Eigenschaft der Steigung als Funktion eines vordefinierten Werts ($\theta_{Standard\_Steigung}$) der Eigenschaft der Steigung, entsprechend dem Wert der Eigenschaft für einen Start bei einer Neigung zwischen 20 und 30° oder einem Wert nahe der maximalen Steigung, die von dem Fahrzeug überwunden werden kann, und/oder der Eigenschaft der Gangübersetzung als Funktion eines vordefinierten Werts ($r_{max}$) der eingelegten Gangübersetzung (r(b)), der auf den maximalen Wert als Absolutwert der Übersetzung eingestellt ist, bestimmt wird.

2. Unterstützungsverfahren nach Anspruch 1, **da-**

**durch gekennzeichnet, dass** bei beeinträchtigtem Betrieb der vordefinierte Wert ($\theta_{Standard\_Steigung}$) einer Steigungseigenschaft für einen Start auf einer Steigung entspricht.

3. Unterstützungsverfahren nach Anspruch 1 oder 2, **dadurch gekennzeichnet, dass** zur Bestimmung des durch die Kupplung oder den Drehmomentwandler übertragenen Drehmomentwerts (ECT) der Fehler bei der Schätzung des übertragenen Drehmoments ($C_{T\_offset}$) und/oder des durch die mit dem Antriebsaggregat verbundenen Elemente aufgenommenen Drehmoments ($C_{T\_abs}$) berücksichtigt wird.

4. Vorrichtung zur Unterstützung von Manövern an einer Steigung für ein Kraftfahrzeug, das ein Antriebsaggregat umfasst, das mittels eines Getriebes und einer Kupplung oder eines Drehmomentwandlers mit den Antriebsrädern verbunden ist, wobei die Vorrichtung weiterhin eine Feststellbremse (5) mit Servounterstützung, einen Neigungssensor (2) und einen Rechner (1) umfasst, **dadurch gekennzeichnet, dass** sie des Weiteren Mittel zur Bestimmung, ob ein durch den Neigungssensor geliefertes für die Neigung charakteristisches Signal nutzbar ist, und/oder Mittel zur Bestimmung, ob ein für die eingelegte Gangübersetzung charakteristisches Signal vorliegt, umfasst und dass der Rechner zur Bestimmung eines Schwellenwerts für das Startmoment ($C_{T\_Schwellen}$) ohne Berücksichtigung des Istwerts der Steigungseigenschaft als Funktion eines vordefinierten Werts ($\theta_{Standard\_Steigung}$) der Eigenschaft der Steigung, entsprechend dem Wert der Eigenschaft für einen Start bei einer Neigung zwischen 20 und 30° oder einem Wert nahe der maximalen Steigung, die von dem Fahrzeug überwunden werden kann, und/oder der Eigenschaft der Gangübersetzung als Funktion eines vordefinierten Werts ($r_{max}$) der eingelegten Gangübersetzung ($r(b)$), der auf den maximalen Wert als Absolutwert der Übersetzung eingestellt ist, angeordnet ist.

5. Vorrichtung zur Unterstützung von Manövern an einer Steigung nach Anspruch 4, **dadurch gekennzeichnet, dass** sie Mittel zur Durchführung eines Unterstützungsverfahrens nach einem der Ansprüche 1 bis 3 umfasst.

**Claims**

1. Method for assisting with hill maneuvers for a vehicle, comprising a drive train, connected to the drive wheels by means of a gearbox and a clutch or a torque converter, and an assisted parking brake (5), during which a threshold take-off torque ($C_{T\_thresh}$) is determined as a function of the longitudinal forces between the wheels of the vehicle and the ground, **characterized in that**, in degraded operation, that is to say when a signal corresponding to the characteristic of the slope ($\theta_{slope}$) that cannot be utilized is received and/or when the computer has no signal characteristic of the gear ratio engaged ($r(b)$), a threshold value is determined for the take-off torque ($C_{T\_thresh}$) without taking into account the real value of the characteristic of the slope as a function of a predetermined value ($\theta_{default\_slope}$) of the characteristic of the slope corresponding to the value of the characteristic for take-off in an angle between 20 and 30° or a value close to the maximum slope that can be negotiated by the vehicle and/or of the characteristic of the gear ratio as a function of a predefined value ($r_{max}$) of the gear ratio engaged ($r(b)$), set to the maximum value as an absolute value of said ratio.

2. Assistance method according to Claim 1, **characterized in that**, in degraded operation, the predefined value ($\theta_{default\_slope}$) corresponds to a slope characteristic for a take-off against the slope.

3. Assistance method according to either of Claims 1 and 2, **characterized in that**, to determine the value of the torque (ECT) transmitted by the clutch or by the torque converter, account is taken of the error in the estimation of the transmitted torque ($C_{T\_offset}$) and/or of the torque absorbed ($C_{T\_abs}$) by the items connected to the drive train.

4. Device for assisting with hill maneuvers for a motor vehicle comprising a drive train connected to the drive wheels by means of a gearbox and a clutch or a torque converter, the device also comprising an assisted parking brake (5), a slope sensor (2) and a computer (1), **characterized in that** it also comprises means for determining whether a signal characteristic of the slope delivered by the slope sensor can be utilized and/or means for determining whether a signal characteristic of the gear ratio is engaged, and **in that** the computer is arranged to determine a threshold value for the take-off torque ($C_{T\_thresh}$) without taking into account the real value of the characteristic of the slope as a function of a predefined value ($\theta_{default\_slope}$) of the characteristic of the slope corresponding to the value of the characteristic for a take-off in an angle between 20 and 30° or a value close to the maximum slope that can be negotiated by the vehicle and/or of the characteristic of the gear ratio as a function of a predefined value ($r_{max}$) of the gear ratio engaged ($r(b)$), set to the maximum value as an absolute value of said ratio.

5. Device for assisting with hill maneuvers according to Claim 4, **characterized in that** it comprises means for implementing an assistance method according to one of Claims 1 to 3.

## FIG. 1

## FIG. 2

**FIG. 3**

$|V|<V_{min}$ ET

$\theta>\theta_{acc\_min}$ ET

$\omega>\omega_{min}$

$\theta_{pente\_store} = \theta_{pente\_defaut}$

$|V|<V_{min}$ pendant $\triangle t_{arrêt}$

$\boxed{10}$ $\boxed{20}$ $\boxed{30}$

$|V|>V_{min}$

$\theta_{acc}<\theta_{acc\_min}$ OU

$\omega<\omega_{min}$

desserrage des freins;
instant d'entrée dans
l'étape 4 : t=t$_4$

$t-t_4>\triangle t_{commande}$

$|V|>V_{min}$

$\boxed{40}$

FIG. 4

**FIG. 5**

EP 2 219 910 B1

## RÉFÉRENCES CITÉES DANS LA DESCRIPTION

**Documents brevets cités dans la description**

- FR 2841199
- FR 2828450

- FR 0756319